# EUROPEAN PATENT APPLICATION

(11) **EP 4 455 446 A1**
(43) Date of publication of application: **30.10.2024**
(21) Application number: 22923688.0
(22) Date of filing: 29.11.2022
(51) Int. Cl.: F01D 1/32, F01D 5/00

(54) **OBLONG TURBINE**

(30) Priority: 27.01.2022 ES 202230064
(71) Applicant: FERNANDEZ MONTES, Jose, 28045 Madrid (ES)
(72) Inventor: FERNANDEZ MONTES, Jose, 28045 Madrid (ES)
(74) Representative: Espiell Gomez, Ignacio
(86) International application number: PCT/ES2022/070770
(87) International publication number: WO 2023/144427

(57) **Abstract**

The invention relates to an oblong turbine, consisting of a flow compressor for aviation engines, with a casing (2) having blades (3) that describe a non-circular path (p) with at least one rectilinear segment (a), preferably in the form of an oblong frame with two parallel rectilinear segments (a) and two semicircular segments (b), comprising: a stator casing (2) internally defining a rail (21) that guides the movement of the blades (3) coupled at a distal end or tip (31); a mechanical transmission system (4) that transmits movement to the blades (3); supports (5) for linking the blades (3) and the rail (21), ensuring that they follow the oblong path, that the average distance between the blades (3) remains constant, and as an interface with the transmission system (4); and a plurality of identical and equidistant blades (3) that provide the dynamic work on the air flow.

## Description

### OBJECT OF THE INVENTION

The invention, as stated in the title of the present specification, relates to an oblong turbine that contributes advantages and features to the function intended, which are described in detail further on.

The object of the present invention relates to a turbine or air compressor apparatus the blades of which, instead of describing a circular path, describe an oblong path. which has a linear segment in which the speed is constant for the entire surface of the blade, providing advantages as an alternative system to the one currently used in aviation engines.

### FIELD OF APPLICATION OF THE INVENTION

The field of application of the present invention is comprised within the sector of the industry dedicated to the manufacture of engines, focusing particularly on the field of turbine engines and more specifically those intended for aviation.

### BACKGROUND OF THE INVENTION

As is known, both current compressors and propellers follow a circular movement, each blade having a rotational movement about a center of rotation, this leads to the following problems:
- The speed distribution is proportional to the radius, which causes the need to limit the speed in the immediate vicinity of the root to the speed that does not generate the stall of the tip.
- The area required for moving the amount of air necessary to propel a vehicle is equally circular, which makes the integration of a propulsion unit in an aerial vehicle difficult.
- The heat footprint of a vehicle depends on the front area that an engine occupies, so as the area increases, the footprint increases.

Therefore, the objective of the present invention is to provide a solution to said problem through the development of an oblong turbine system as a result of which each blade is allowed to follow a path that is not circular, but has a linear segment in which the speed is constant for the entire surface of the blade, successfully providing a series of advantages, particularly an improved performance of aviation engines in terms of air compression previously carried out by the turbine.

Furthermore, and as a reference to the current state of the art, it should be indicated that at least the applicant is unaware of the existence of any oblong turbine, or of any other invention of similar application, which presents technical, structural, and constitutive features that are the same as or similar to those presented by that which is claimed herein.

### DESCRIPTION OF THE INVENTION

The oblong turbine proposed by the invention is an improvement over the current state of the art, with the characterizing details that make it possible and distinguish conveniently it being included in the final claims that accompany the present description.

Specifically, as described above, the invention proposes a turbine or air compressor for aviation engines that is essentially distinguished by the fact that the blades thereof, instead of describing a circular path about a central axis, describe an oblong path, that is, an elongated path with a straight segment between two semicircular ends, which provides significant advantages, particularly in terms of air compression performance, which make it particularly suitable as an alternative system to that currently used in aircraft engines.

To that end, and more specifically, the oblong turbine of the invention comprises the following essential parts:
- An external casing or stator that, in an innovative manner, is configured by way of a rail and has a configuration in the form of an oblong frame that guides the displacement movement of the blades, comprising two parallel straight segments and two semicircular segments that connect the respective ends of the straight segments.
- A mechanical transmission system to provide power to the device.
- A plurality of supports that serve as a link between each blade and the stator rail for the purpose of:
- ensuring the path by means of using bearings on the stator rail,
- ensuring the distance between adjacent supports, and
- serving as an interface with the mechanical transmission.
- And a plurality of identical and equidistant blades which, when moving inside the stator, provide the dynamic work on the flow, being associated at one end to the rail that defines said stator through the supports and to a central guiding element at the opposite end.

The turbine of the invention thereby allows each blade to follow a path which, instead of being circular, has a linear returning segment in which the speed is constant for the entire surface of the blade.

The advantages of this distribution of the path of the blades in the turbine of the invention are as follows:
- The average speed of a blade with respect to the air is higher, so compression increases and engine consumption decreases.
- Integration into the aircraft structure will be easier.
- The average air outflow speed upon passing the compressor will be closer to the direction marked by the engine shaft.
- The area is reduced for the same compression and mass flow rate of the engine, so the heat thermal footprint is also reduced.

It is important to note that the described path followed by the blades on the stator rail of the compressor turbine object of the present invention must meet the following requirements:
- The existence of a constant speed of the outermost point of each blade along the path.
- The existence of a continuous evolution of the radius of rotation of each point in order to prevent sudden changes that cause propulsions along the path which will decrease the service life of the assembly.
- Being a closed path.
- And the measured distance along the path between blades remains constant.

This is achieved by generating a rail through which the blade tip moves and which brings together three types of segments:
- Linear segment
- Adaptation segment
- Circumferential return segment with radius R

By suitably choosing the constant a, the radius R, and the path change point for adaptation to the circumferential segment, the first three conditions are met. In order to meet the fourth condition, that is, to maintain a constant average distance between the blades, a support is designed to fix the blade tip to the rail which is particularly designed to meet said condition.

### DESCRIPTION OF THE DRAWINGS

To complete the description provided herein, and for the purpose of helping to make the features of the invention more readily understandable, this description is accompanied by drawings constituting an integral part of the same, which by way of illustration and not limitation represent the following:

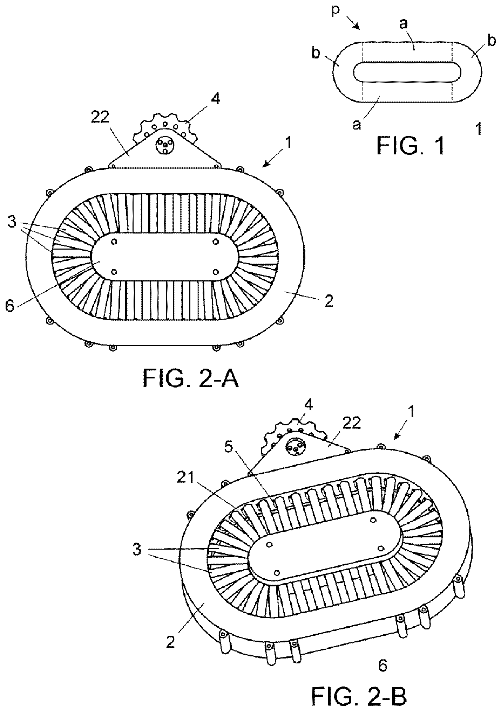

Figure 1 shows the profile of the path followed by the blades of the oblong turbine according to the invention.
Figure 2-A shows a schematic plan view of an embodiment of the oblong turbine object of the invention, in which its general configuration and main parts can be seen;
Figure 2-B shows a perspective schematic view of the example of the oblong turbine according to the invention, shown in Figure 1;
Figure 3 shows a schematic perspective view of one of the supports that link each of the blades to the inner rail of the casing forming the stator of the turbine, viewed from the external part, in which its configuration and the bearings that it has can be seen;
Figure 4 shows a schematic perspective view of two of the supports that link the blades to the rail of the stator casing, viewed from the internal part, in which the spacers provided between them to maintain the separation between blades can be seen;
Figure 5 shows a schematic perspective view of a detail of the turbine of the invention in which, in addition to the coupling of the blades to the supports, the coupling between these and the mechanical transmission can be seen; and
Figures 6 and 7 show respective schematic front elevational views of an example of an airplane with the oblong turbine of the invention and an example of an airplane with a conventional circular turbine that represents the current state of the art.

### PREFERRED EMBODIMENT OF THE INVENTION

In view of the aforementioned figures, and in accordance with the adopted numbering, one may observe therein a non-limiting embodiment of the oblong turbine of the invention, which comprises what is described in detail below.

In that sense, as can be seen in said figures, the turbine (1) of the invention consists of a flow compressor preferably applicable for aviation engines which comprises at least one casing (2) in which there are integrated a plurality of blades (3) which, moved by the action of a mechanism to compress the air flow that passes therethrough, describe a non-circular path (p) with at least one rectilinear segment (a).

Preferably, the external casing (2) that defines a rail (21) having a configuration in the form of an oblong frame that defines the path (p) followed by the blades (3) and comprising two parallel rectilinear segments (a) and two semicircular segments (b).

More specifically, in a preferred embodiment, the turbine (1) comprises:
- an external casing (2) that acts as a stator internally defining a rail (21) having a configuration in the form of an oblong frame that guides the displacement movement of a plurality of blades (3) coupled thereto at a distal end or tip (31), wherein the path followed by the blades (3) on said rail (21) contemplates two parallel rectilinear segments (a) and two semicircular segments (b) that connect the respective ends of the rectilinear segments (a);
- a mechanical transmission system (4) that transmits movement to the blades (3), providing power to the turbine (1);
- a plurality of supports (5) which, coupled to the distal end or tip (31) of each blade (3), serve as a link between the blades (3) and the rail (21) of the stator casing (2), ensuring that the blades (3) follow the oblong path of the rail (21), that the average distance between the blades (3) remains constant and acting as an interface with the transmission system (4); and
- a plurality of identical and equidistant blades (3) which, when moving inside the stator casing (2), provide the dynamic work on the air flow, being associated at one end (31) with the rail (21) that defines said stator through the supports (5).

Preferably, the blades (3) have a rectangular configuration with a curved cross-section such that they are connected at a first distal end or tip (31) to the rail (21) of the stator casing (2) by means of the supports (5) and coupled to a central guiding element (6) at the opposite end (32).

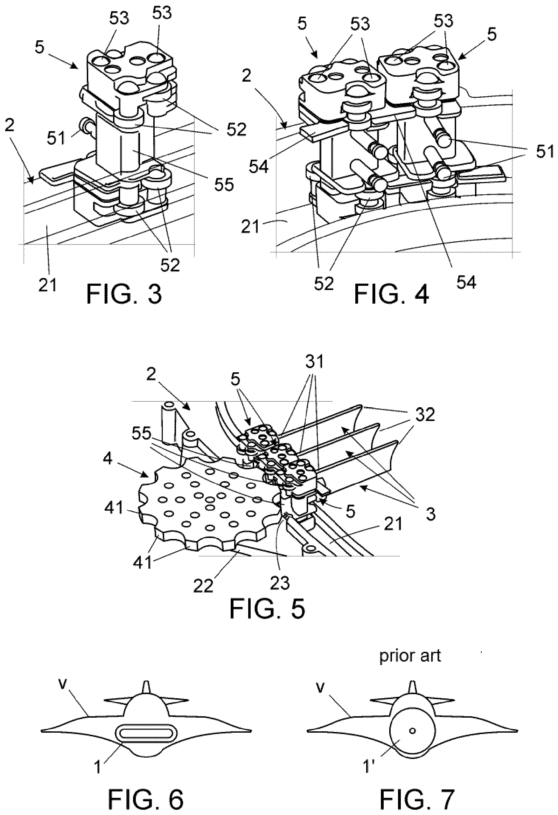

Preferably, as can be seen in Figures 3 and 4, in order to ensure the path of the blades (3) on the rail (21), the supports (5) comprise, in addition to rods (51) for connecting with said blades on their inner face, comprise bearings (52, 53) that contact the wall of the rail (3) defining the stator casing (2), ensuring that the blades (3) follow the oblong path of the rail (21), and spacer elements (54) which ensure that the average distance between the blades (3) remains constant.

In the preferred embodiment, the rail (21) has a configuration with a C-shaped cross-section and the supports (5) have cylindrical bearings (52) on their sides and spherical bearings (53) on their respective upper and lower bases, such that both of them contact all the inner walls of said rail (21).

In addition, the supports (5) also have protuberances (55) on their external face for the engagement of the teeth (41) of the gearwheel (4) forming the turbine transmission system, which gearwheel, as can be seen in Figure 5, is incorporated in a lateral space (22) provided to that end in the casing (2), being partially inserted into a groove (23) made in the rail (21) such that it is coupled to the supports (5) in said protuberances (55) that act as an interface, ensuring the continuous movement of same, and in turn of the blades (3).

Considering Figures 6 and 7, the position that the oblong turbine (1) of the invention would occupy in an aircraft (v) (Figure 6) and the difference with a circular turbine (1') constituting the current state of the art (Figure 7) are schematically observed, providing the advantages that have been indicated in preceding paragraphs, i.e., the average speed of the blades (3) is higher, increasing compression and decreasing engine consumption, the integration into the structure of the aircraft (v) will be easier, the average air outflow speed upon passing the compressor is closer to the direction marked by the engine shaft, and the area is smaller for the same compression and mass flow rate of the engine, so the heat thermal footprint is also smaller.

Having sufficiently described the nature of the present invention, as well as the ways in which it may be implemented, it is not considered necessary to expand the explanation thereof in order for a person skilled in the art to understand the scope of the invention and the advantages derived therefrom.

## Claims

1. An oblong turbine, consisting of a flow compressor, particularly applicable for aviation engines, **characterized by** comprising a casing (2) in which there are integrated a plurality of blades (3) which, moved by the action of a mechanism to compress the air flow that passes therethrough, describe a non-circular path (p) with at least one rectilinear segment (a).

2. The oblong turbine according to claim 1, **characterized by** comprising an external casing (2) that defines a rail (21) having a configuration in the form of an oblong frame that defines the path (p) followed by the blades (3) and comprising two parallel rectilinear segments (a) and two semicircular segments (b).

3. The oblong turbine according to claim 2, **characterized by** comprising:
- an external casing (2) that acts as a stator internally defining a rail (21) having a configuration in the form of an oblong frame that guides the displacement movement of a plurality of blades (3) coupled thereto at a distal end or tip (31), wherein the path followed by the blades (3) on said rail (21) contemplates two parallel rectilinear segments (a) and two semicircular segments (b) that connect the respective ends of the rectilinear segments (a);
- a mechanical transmission system (4) that transmits movement to the blades (3), providing power to the turbine (1);
- a plurality of supports (5) which, coupled to the distal end or tip (31) of each blade (3), serve as a link between the blades (3) and the rail (21) of the stator casing (2), ensuring that the blades (3) follow the oblong path of the rail (21), that the average distance between the blades (3) remains constant and acting as an interface with the transmission system (4); and
- a plurality of identical and equidistant blades (3) which, when moving inside the stator casing (2), provide the dynamic work on the air flow, being associated at one end (31) with the rail (21) that defines said stator through the supports (5).

4. The oblong turbine according to claim 3, **characterized in that** the blades (3) have a rectangular configuration such that they are connected at a first distal end or tip (31) to the rail (21) of the stator casing (2) by means of the supports (5), and coupled to a central guiding element (6) at the opposite end (32).

5. The oblong turbine according to claim 3 or 4, **characterized in that** the supports (5) comprise rods (51) for connection with the blades (3).

6. The oblong turbine according to any of claims 3 to 5, **characterized in that** the supports (5) comprise bearings (52, 53) that contact the wall of the rail (3) defining the stator casing (2).

7. The oblong turbine according to any of claims 3 to 6, **characterized in that** the supports (5) comprise spacer elements (54) which ensure that the average distance between the blades (3) remains constant.

8. The oblong turbine according to any of claims 3 to 7, **characterized in that** the rail (21) has a configuration with a C-shaped cross-section and the supports (5) have cylindrical bearings (52) on their sides and spherical bearings (53) on their respective upper and lower bases, such that both of them contact all the inner walls of said rail (21).

9. The oblong turbine according to any of claims 3 to 8, **characterized in that** the supports (5) have protuberances (55) for the engagement of the teeth (41) of a gearwheel (4) forming the turbine transmission system.

10. The oblong turbine according to claim 9, **characterized in that** the gearwheel (4) of the transmission system is incorporated in a lateral space (22) provided to that end in the casing (2), being partially inserted into a groove (23) made in the rail (21) such that it is coupled to the supports (5) in the protuberances (55).
